# EUROPEAN PATENT SPECIFICATION

(11) **EP 1 681 790 B1**
(45) Date of publication and mention of the grant of the patent: **30.05.2007**
(21) Application number: 06000613.7
(22) Date of filing: 12.01.2006
(51) Int. Cl.: H04L 1/00

(54) **Apparatus and method for transmitting information data in a wireless communication system**
Vorrichtung und Methode zum Senden von Informationsdaten in einem drahtlosen Kommunikationssystem
Dispositif et méthode pour transmettre des données de l'information dans un système de communication sans fil

(30) Priority: 12.01.2005 KR 2005003051
(43) Date of publication of application: 19.07.2006
(73) Proprietor: Samsung Electronics Co., Ltd., Suwon-si, Gyeonggi-Do (KR)
(72) Inventor: Hwang, In-Seok, Yeongtong-gu Suwon-si Gyeonggi-do (KR); Yoon, Soon-Young, Yeongtong-gu Suwon-si Gyeonggi-do (KR); Sung, Sang-Hoon, Yeongtong-gu Suwon-si Gyeonggi-do (KR); Cho, Jae-Hee, Yeongtong-gu Suwon-si Gyeonggi-do (KR); Huh, Hoon, Yeongtong-gu Suwon-si Gyeonggi-do (KR); Yang, Jang-Hoon, Yeongtong-gu Suwon-si Gyeonggi-do (KR)
(74) Representative: Grünecker, Kinkeldey, Stockmair & Schwanhäusser Anwaltssozietät

(56) References cited:
- WO-A-02/41520
- DE-A1- 19 958 510
- US-A1- 2004 095 953
- US-B1- 6 671 284
- EKLUND C ET AL: "IEEE STANDARD 802.16: A TECHNICAL OVERVIEW OF THE WIRELESSMAN AIR INTERFACE FOR BROADBAND WIRELESS ACCESS" IEEE COMMUNICATIONS MAGAZINE, IEEE SERVICE CENTER,NEW YORK, NY, US, vol. 40, no. 6, June 2002 (2002-06), pages 98-107, XP001123517 ISSN: 0163-6804

## Description

The present invention generally relates to a broadband wireless access (BWA) communication system, and more particularly to an apparatus and method for transmitting information data including control information and data in an adaptive antenna system (AAS) of a broadband wireless communication system.

Currently, extensive research is being conducted to provide users with services based on various qualities of service (QoS) at a high transmission rate of about 100 Mbps, in fourth-generation (4G) communication systems serving as next-generation communication systems. In the current 4G-communication system, research is actively being conducted to support a high-speed service for ensuring mobility and QoS in broadband wireless access (BWA) communication systems such as wireless local area network (LAN) and metropolitan area network (MAN) communication systems. Typical 4G-communication systems are Institute of Electrical and Electronics Engineers (IEEE) 802.16a and 802.16e communication systems.

The IEEE 802.16a and 802.16e communication systems use orthogonal frequency division multiplexing and/or orthogonal frequency division multiple access (OFDM/OFDMA) to support a broadband transmission network for a physical channel of the wireless MAN system. The IEEE 802.16a communication system considers a state in which a subscriber station (SS) is fixed. In other words, the IEEE 802.16a communication system considers only a single cell structure, and not SS mobility. However, the IEEE 802.16e communication system is used to support SS mobility in the IEEE 802.16a communication system. An SS with mobility is referred to as a mobile station (MS).

The IEEE 802.16e communication system extends a cell service area using multiple antennas and uses a space division multiple access (SDMA) scheme for increasing a total capacity. To use the SDMA scheme, an uplink adaptive antenna system (AAS) preamble is defined in the standard such that channel quality information (CQI) of MSs can be correctly estimated.

A base station (BS) generates beams using a correlation between spatial channels estimated through preambles such that interference between users, i.e., MSs, can be minimized. When the beams are generated using the correlation, interference of signals of the MSs interfering with other neighbor MSs is reduced, such that data can be correctly decoded.

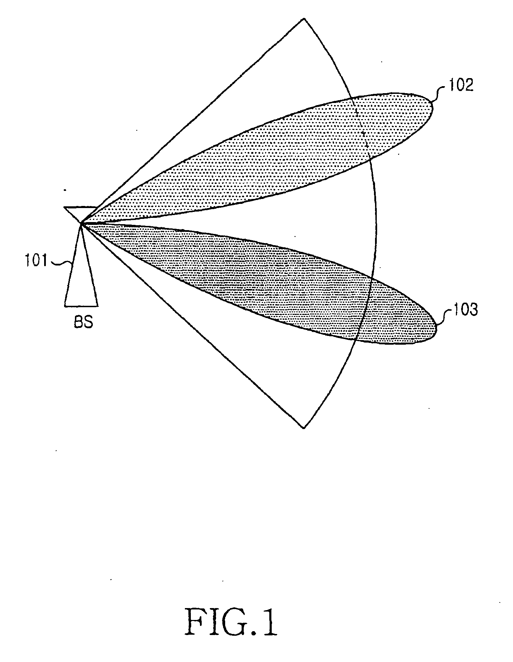

FIG 1 schematically illustrates a broadband wireless communication system using a conventional SDMA scheme.

Referring to FIG. 1, a BS 101 allocates, to different MSs, identical time and frequency resources to be simultaneously used in a first spatial channel transmitted through a first beam 102 and a second spatial channel transmitted through a second beam 103. To allocate the identical time and frequency resources to the different MSs, the BS 101 generates a plurality of spatially divided beams, for example, the first beam 102 and the second beam 103.

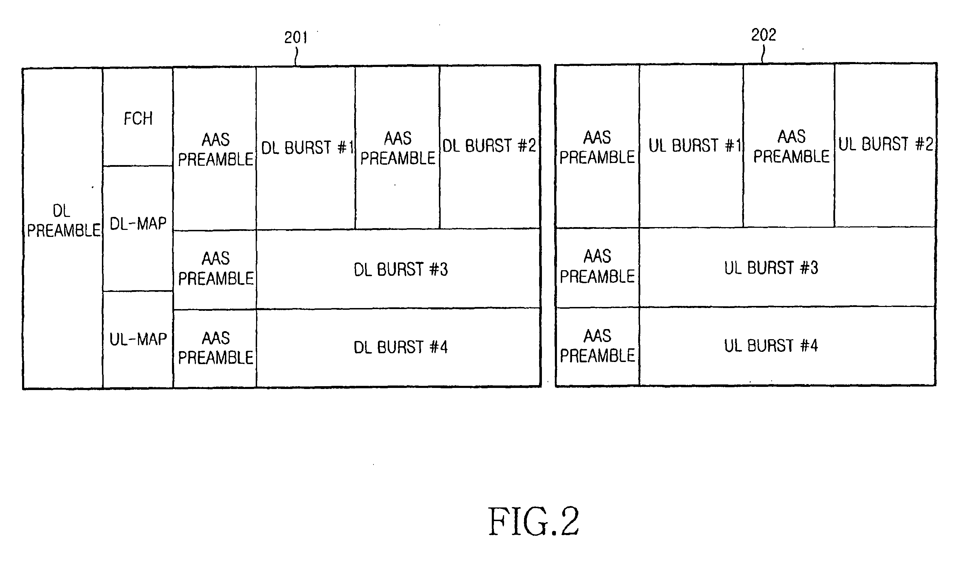

FIG. 2 schematically illustrates the frame structure of the conventional broadband wireless communication system.

Referring to FIG. 2, a frame is divided into a downlink (DL) frame 201 and an uplink (UL) frame 202. The DL frame 201 includes a DL preamble region, a frame control header (FCH) region, a DL-MAP region, a UL-MAP region, a region of a plurality of AAS preambles and a region of a plurality of DL Bursts.

The DL preamble region is used to transmit a synchronization signal for synchronization acquisition between a transmitter and a receiver, i.e., a preamble sequence. The FCH region is used to transmit information indicating a length and coding scheme of a DL-MAP. A position and a modulation and coding scheme (MCS) of the FCH region are fixed. The DL-MAP region is used to transmit a DL-MAP message. The UL-MAP region is used to transmit a UL-MAP message referred to in the DL-MAP message. A concrete description of information elements (IEs) included in the DL-MAP and UL-MAP messages is omitted here, for the sake of conciseness.

The UL frame 202 includes a region of a plurality of AAS preambles and a region of a plurality of UL Bursts.

On the other hand, the conventional broadband wireless communication system transmits an AAS private MAP in a DL message to support the AAS. The AAS private MAP (hereinafter, the private MAP) includes allocation information and AAS frame configuration information for a specific user.

The AAS private MAP message defined in the broadband wireless communication system defines information about DL and UL band allocation regions in the next frame to be demodulated by a specific MS and defines control information including system operational information for the AAS. This control information is connected to a data burst in an information bit level in the current frame for efficient transmission. The control information and the data burst are transmitted through an antenna after undergoing a coding and modulation process in an identical level and a beamforming process.

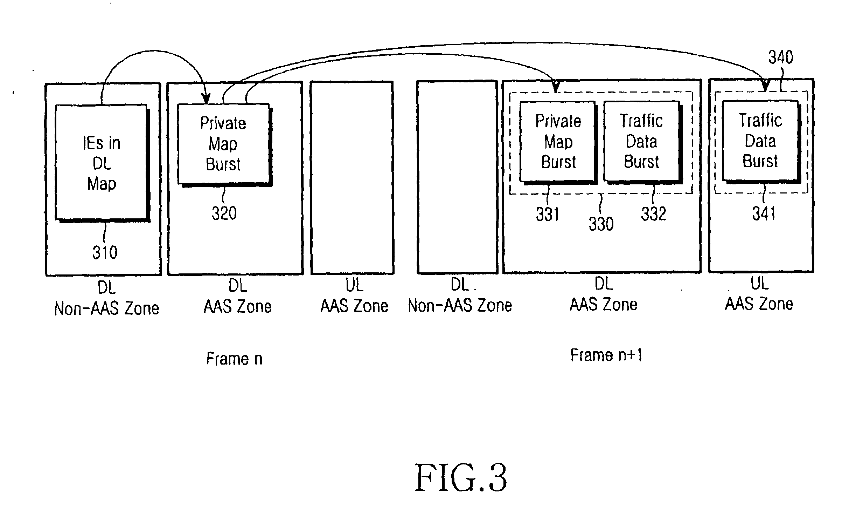

FIG. 3 schematically illustrates a conventional process for transmitting a private MAP message.

FIG. 3 illustrates an example in which a DL-MAP 310 of the n-th frame (Frame n) designates a private MAP 320 of an AAS zone. Referring to FIG. 3, the private MAP 320 is configured by AAS_Private_DL-MAP for designating a DL allocation region and AAS_Private_UL-MAP for designating a UL allocation region. AAS_Private_DL-MAP and AAS_Private_UL-MAP designate a DL allocation region 330 and a UL allocation region 340 of the Frame n+1, respectively.

As described with reference to FIG. 2, a DL frame includes a DL-MAP message corresponding to a message for describing all resource allocations in the frame. Because system common control information is transmitted in the DL-MAP message, it is broadcast to all MSs without directivity. A DL/UL AAS zone corresponds to a zone in which the BS uses an adaptive antenna for forming a directional beam on an MS-by-MS basis, and is defined in the DL-MAP message in an OFDM symbol unit.

The private MAP message indicates allocation information on the MS-by-MS basis in the AAS zone. If the private MAP is first used, it is pointed to in the DL-MAP transmitted in a non-AAS zone. That is, the private MAP 320 of FIG. 3 is pointed to in the DL-MAP 310.

After receiving and decoding the private MAP 320, the MS demodulates and decodes the DL allocation region 330 in the (n+1)-th fFrame n+1. Through these operations, the MS separates the DL allocation region 330 into a private MAP burst 331 containing allocation information of the Frame n+2 in the information bit level and a traffic data burst 332 of the Frame n+1. Moreover, the MS transmits a UL data burst 341 through the UL allocation region 340.

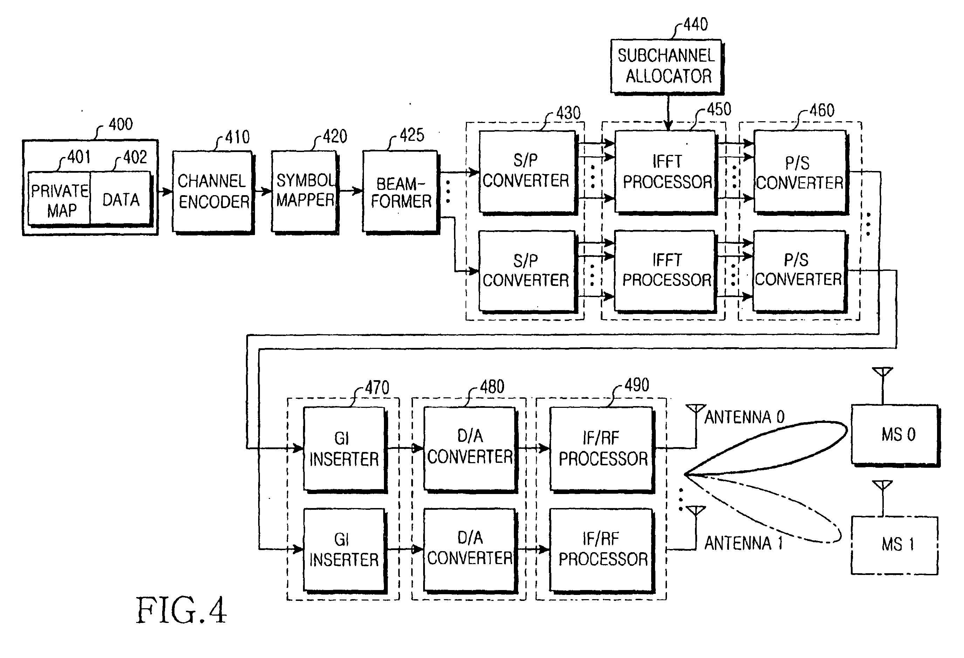

FIG. 4 is a block diagram schematically illustrating the structure of the conventional transmitter for transmitting a private MAP in a broadband wireless communication system.

Referring to FIG. 4, the transmitter includes a channel encoder 410, a symbol mapper 420, a beamformer 425, a plurality of serial-to-parallel (S/P) converters 430, a subchannel allocator 440, a plurality of inverse fast Fourier transform (IFFT) processors 450, a plurality of parallel-to-serial (P/S) converters 460, a plurality of guard interval (GI) inserters 470, a plurality of digital-to-analog (D/A) converters 480 and a plurality of radio frequency (RF) processors 490.

First, allocation information 400 of a private MAP message 401 and a data burst 402 to be transmitted is input to the channel encoder 410. When receiving the allocation information 400, the channel encoder 410 encodes the allocation information 400 in a preset coding scheme and then outputs the encoded allocation information to the symbol mapper 420. Here, the coding scheme may be all kinds of encoding scheme, e.g., a turbo coding or convolutional coding scheme based on a coding rate.

The symbol mapper 420 modulates encoded information bits output from the channel encoder 410 on the basis of a preset modulation scheme, generates a modulated symbol and outputs the modulated symbol to the beamformer 425. Here, the modulation scheme is a Quadrature Phase Shift Keying (QPSK) scheme, a Quadrature Amplitude Modulation (QAM) scheme or a 16-QAM scheme.

Conventionally, the transmitter modulates and encodes the allocation information 400 configured by one packet, i.e., the private MAP message 401 and the data burst 402, in an identical modulation and coding scheme (MCS) level.

The beamformer 425 forms beams to be transmitted through a plurality of adaptive antennas, and outputs modulated symbols corresponding to the formed beams to the S/P converters 430.

The S/P converters 430 receive the modulated symbols, convert the received modulated symbols in a parallel fashion, and output the parallel symbols to the IFFT processors 450. At this time, the subchannel allocator 440 allocates subchannels to the modulated symbols in a subchannel allocation scheme based system setup, and outputs an allocation result to the IFFT processors 450. Then, the IFFT processors 450 receive the modulated symbols output from the S/P converters 430, perform N-point IFFTs and output IFFT signals to the P/S converters 460. The P/S converters 460 receive the signals output from the IFFT processors 450, convert the received signals in a serial fashion and output the serial signals to the GI inserters 470.

The GI inserters 470 receive the serial signals output from the P/S converters 460, insert GI signals into the received signals, and output, to the D/A converters 480, the signals into which the GI signals have been inserted. Here, the GI signal is inserted to remove interference between an OFDM symbol transmitted in the previous OFDM symbol time and an OFDM symbol transmitted in the current OFDM symbol time when the OFDM symbols are transmitted in the OFDM communication system.

The D/A converters 480 receive the time domain OFDM signals from the GI inserters 470, convert the received time domain OFDM signals to analog signals and output the analog signals to the RF processors 490. The RF processors 490 convert the signals output from the D/A converters 480 to RF signals such that the RF signals can be transmitted to air. The RF processors 490 transmit the RF signals to air through transmit (Tx) antennas.

When receiving the allocation information 400 from the BS, MSs, for example, MS 0 and MS 1, separate the private MAP message 401 and the data burst 402 in an information bit level by performing identical demodulation and decoding operations on the allocation information 400, i.e., the private MAP message 401 and the data burst 402. When receiving a signal from the BS's transmitter, the MSs recover an information bit stream by demodulating and decoding a DL allocation region in a demodulation and decoding scheme that is the inverse of the modulation and coding scheme applied in the BS. Then, the MSs separate, from the recovered information bit stream, system configuration change information, control information associated with as an UL/DL band allocation region of the next frame, and a DL data burst transmitted in the current frame.

In the conventional technology as described above, the control information and the DL data burst have the same coverage according to the private MAP message transmission scheme. In the conventional technology, variation in a wireless environment may occur due to a channel quality measurement error and report delay. Therefore, a problem arises wherein important control information such as system configuration change information may not be received.

When hybrid automatic retransmission request (HARQ) technology is used to transmit data for which an expected reception error rate is set high regardless of stability under an assumption that a data burst is actively retransmitted to cope with the above-described uncertain wireless environment variation, control information for the HARQ operation must be more robust than the data burst. However, this cannot be supported in the conventional method for transmitting an AAS private MAP message.

US 2004/095953 A1 discloses a radio terminal, a module for such a unit and method for transmitting associated control channels, wherein the method is intended to improve the quality of control signaling based on signaling messages controlling speech or data transmission over an air interface between at least two radio terminals of a radio communication system. The speech or data is transmitted in at least one traffic channel of the radio communication system, wherein the signaling messages are transmitted in control channels associated with the at least one traffic channel. In order to allow for an improved performance of slow associated control channels, (SACCH) and fast associated control channels (FACCH), it is proposed that a first and a second signaling message with identical content are transmitted in two separate associated control channels. Alternatively, it is proposed that a signaling message included in a single associated control channel (ACCH) is coded with a strong coding. The signaling messages can be transmitted independently as long as no user data is transmitted. Once the mobile station has finished a pre-synchronization with all neighboring cells, the same signaling message included in the SACCH is transmitted in a second SACCH, which provides idle slots in the multi-frame. The signaling message included in the second SACCH is coded differently by using a different polynomial than the one used for the coding of the same message included in the first SACCH. During pre-synchronization, the contents transmitted in the second SACCH are usually simply ignored, the multi-frame leaving therefore just as much time for the pre-synchronization procedures as the known multi-frames.

WO 02/41520 A discloses an improved framing for an adaptive modulation communication system. The key objective of this wireless communication system is to provide communication tunnels on demand between a plurality of consumer subscriber units and their respective base stations in order to connect the subscriber unit user with the fixed network infrastructure. A downlink subframe transmits control data along with down link data intended for one or more terminals. Downlink data symbols are used for transmitting data to the terminals. The symbols may be grouped by a PHY mode, terminal identification and user ID: For example, the downlink data symbols are grouped by PHY modes. Thus, these symbols destined for terminals that are scheduled to received during the PHY modes where modulated using the same PHY mode. Once grouped by PHY modes, each time block is transmitted in a predefined modulation sequence using a scheduling approach. In any downlink subframe, any one or more of the PHY modes may be present. An exemplary downlink map can include a sequence of 20 bit entries. For example, 4 bits can contain a Downlink Interval Usage Code (DIUC) entry. The DIUC defines the downlink PHY mode for each PHY mode in the downlink data. The DIUC can indicate the PHY mode (i.e. modulation, FEC) and also whether the PHY mode is preceded by a preamble (TDMA) or not (TDM). For example, the downlink map may include entries for a begin TDM portion, a TDM transition to Q16, a TDM transition to Q64, and end of TDM portion and an end of an TDMA portion. The downlink map is valid for the frame in which it appears.

US-B1-6 671 284 discloses a frame control for efficient media access. A unit of communication exchanged between stations is in the form of a frame or packet. A frame may include data in conjunction with a delimiter or a delimiter by itself. The delimiter is a combination of preamble and frame control information. The data and frame control information are received from a MAC unit, but are handled differently by a PHY unit. During a data transmit process, data and control information are received at the PHY-to-MAC interface 74 over a PHY-to-MAC bus. A data FES encoder encodes scrambled data pattern in a forward error correction code and subsequently interleaves the encoded data. Any forward error correction code, for example, a Reed-Solomon or both a Reed-Solomon code and a conventional code, can be used for this purpose. A modulator reads the FEC encoded data and FEC encoded control information from a frame control FEC encoder, and modulates the encoded data and control information onto carriers in OFDM symbols in accordance with conventional PFDM modulation techniques. A TX configuration unit receives the control information from a PHY-to-MAC I/F. This control information includes information about the channel over which data is to be transmitted from the MAC interface. The TX configuration unit uses this information to select an appropriate channel map from the TX channel maps a memory. The selected channel map specifies a transmission mode, as well as a modulation type for all carriers and set of carriers to be used for the transmission of the data, and therefore specifies OFDM symbol block sizes associated with the data transmission.

The present invention has been designed to solve the above and other problems occurring in the prior art. Therefore, it is the object of the present invention to provide an improved apparatus and improved method for transmitting and receiving a data burst and control information including a private MAP for each user through different modulation and coding schemes in a broadband wireless communication system.

This object is solved by the subject matter of the independent claims.

Preferred embodiments are defined in the dependent claims.

It is an aspect of the present invention to provide an adaptive antenna system (AAS) private MAP message for transmitting, to each user, control information and system configuration change information included in a private MAP that is more robust than a downlink data burst.

It is another aspect of the present invention to provide an apparatus and method that can separate downlink data and control information to be transmitted to a mobile station and transmit the downlink data and control information through different modulation and coding schemes in a broadband wireless communication system.

It is yet another aspect of the present invention to provide an apparatus and method that can recover downlink data and control information based on different modulation and coding schemes transmitted from a base station in a broadband wireless communication system.

In accordance with an aspect of the present invention, there is provided a method for transmitting and receiving information data in a wireless communication system, including: separating information data to be transmitted from a base station into control information and data, applying different modulation and coding schemes to the control information and the data, and transmitting the information data to an associated mobile station; and identifying the modulation and coding schemes of the information data received from the base station in the mobile station, and demodulating a total of the information data according to the modulation and coding schemes, or independently demodulating the control information and the data according to the modulation and coding schemes.

In accordance with another aspect of the present invention, there is provided a method for transmitting allocation information of an adaptive antennas system (AAS) zone in an AAS, including separating control information and downlink data to be transmitted to a mobile station, performing different modulation and coding processes for the control information and the data, and transmitting, to the mobile station, the control information and the data to which the different modulation and coding processes have been applied.

In accordance with another aspect of the present invention, there is provided a method for receiving allocation information of an adaptive antenna system (AAS) zone in an AAS, including identifying modulation and coding schemes of a control information region and an user data region from a total allocation region of information data transmitted from a base station, decoding control information according to a first modulation and coding scheme allocated to the control information of the allocation region, and decoding new data according to a second modulation and coding scheme allocated to the data of the allocation region.

In accordance with yet another aspect of the present invention, there is provided a system for transmitting and receiving allocation information of an adaptive antenna system (AAS) zone in a wireless communication system, including a base station for dividing information data to be transmitted to a mobile station into control information and data, applying different modulation and coding schemes to the control information and the data, and transmitting the information data to the mobile station, and the mobile station for identifying the modulation and coding schemes of the information data received from the base station, and demodulating a total of the information data according to the modulation and coding schemes, or independently demodulating the control information and the data according to the modulation and coding schemes.

The present invention will be more clearly understood from the following detailed description taken in conjunction with the accompanying drawings, in which:
FIG. 1 schematically illustrates a broadband wireless communication system using a conventional space division multiple access (SDMA) scheme;
FIG. 2 schematically illustrates a frame structure of the conventional broadband wireless communication system;
FIG. 3 schematically illustrates a conventional process for transmitting a private MAP message;
FIG. 4 is a block diagram schematically illustrating a transmitter structure of the conventional broadband wireless communication system;
FIG. 5 is a block diagram schematically illustrating a transmitter structure of a broadband wireless communication system in accordance with the present invention;
FIG. 6 illustrates a scheme for expressing an allocation region in the broadband wireless communication system in accordance with the present invention;
FIG 7 illustrates the coverage of control information and a data burst in accordance with the present invention; and
FIG. 8 is a flowchart illustrating a reception process in a mobile station of the broadband wireless communication system in accordance with the present invention.

Preferred embodiments of the present invention will be described in detail herein below with reference to the accompanying drawings. In the following description, detailed descriptions of functions and configurations incorporated herein that are well known to those skilled in the art are omitted for the sake of clarity and conciseness.

The present invention proposes an apparatus and method for transmitting data in a broadband wireless access (BWA) communication system. Specifically, the present invention relates to an apparatus and method for transmitting system operational information and band allocation information in an adaptive antenna system (AAS) of a broadband wireless communication system.

The present invention also relates to a method for transmitting, to a specific user or mobile station (MS), data and a private MAP serving as an operational message including system operational information and band allocation information from a base station (BS) system based on the AAS defined in a conventional broadband wireless communication system. In addition, the present invention relates to an apparatus and method for transmitting and receiving a private MAP and data processed in different modulation and coding scheme (MCS) levels.

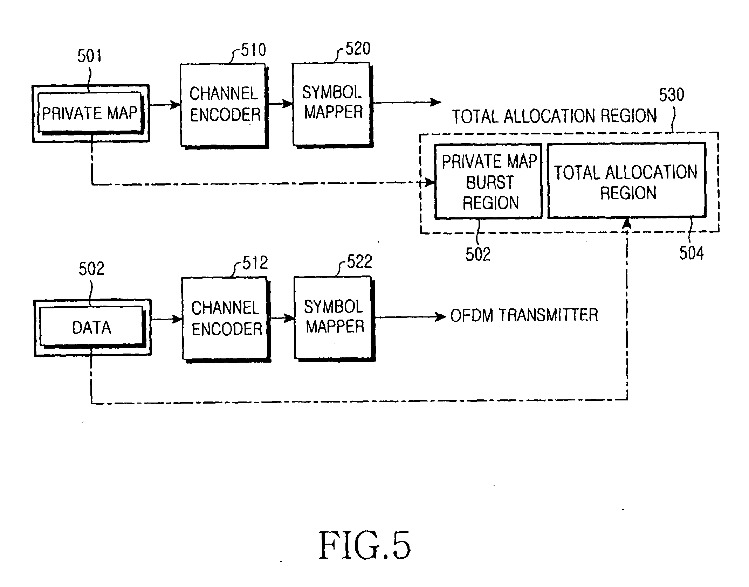

FIG. 5 is a block diagram schematically illustrating a transmitter structure of a broadband wireless communication system in accordance with the present invention.

FIG. 5 illustrates an MCS for a private MAP in accordance with the present invention. A structure of the input stage of the transmitter illustrated in FIG. 4 is separated such that a private MAP transmission concept illustrated in FIG. 5 can be explained.

As illustrated in FIG. 5, a total allocation region 530 in accordance with an embodiment of the present invention has the same function as the total allocation region 330 of FIG. 3. The private MAP message 401 and the data burst 402 of FIG. 4 are combined into one unit as in the total allocation region 330 of FIG. 3, and are conventionally processed in the same MCS level. However, the present invention processes a private MAP message 501 and a data burst 502 in different modulation and coding processes. In accordance with the present invention, a private MAP region and an user data region are separated from a total allocation region 530 of FIG. 5, and different MCS levels are allocated to the private MAP region and the user data region. The private MAP region and the user data region in the different MCS levels are transmitted.

For example, the private MAP message 501 undergoes the first modulation and coding through a channel encoder 510 and a symbol mapper 520, while the data burst 502 undergoes the second modulation and coding through a channel encoder 512 and a symbol mapper 522. Because a process subsequent to the channel encoders 510 and 512 and the symbol mappers 520 and 522 is the same as described with reference to FIG. 4, its detailed description is omitted here. The channel encoders 510 and 512 and the symbol mappers 520 and 522 are conceptually separated from each other for a better explanation of the present invention. It should be noted that the channel encoders 510 and 512 or the symbol mappers 520 and 522 are preferably provided in one configuration as illustrated in FIG. 4. However, the present invention is not limited to this structure. Of course, the channel encoder and the symbol mapper for the private MAP and the channel encoder and the symbol mapper for the data burst can be separately configured as illustrated in FIG. 5.

After the various modulation and coding processes and a beamforming process occur, the private MAP message and the data burst are transmitted through an antenna. In this case, the private MAP message and the data burst are transmitted in an identical beam pattern after undergoing the various modulation and coding processes in accordance with the present invention.

In the present invention, the various modulation and coding processes are performed for the private MAP message and the data burst, such that a coverage extension gain can be obtained through a directional beamforming gain, and also, control information can be stabilized. These advantages will be clearly described with reference to Table 1.

**Table 1**

| Scheme/feature | | Beamforming gain | | Control info Protection level control |
|---|---|---|---|---|
| | | Allocation info | Data burst | |
| Prior art | DL-MAP | No | Yes | No |
| | Private MAP | Yes | Yes | No |
| Improved private MAP scheme | | Yes | Yes | Yes |

Table 1 shows features in accordance with the present invention. From Table 1, a beamforming gain is absent because allocation information based on a conventional DL-MAP is transmitted in a non-AAS zone and a protection level for the allocation information cannot be controlled on an MS-by-MS basis. Beamforming gains for both the allocation information and the data burst in the private MAP transmitted in the AAS zone can be obtained, and a protection level of the allocation information is the same as that of the data burst. In accordance with the present invention, the allocation information undergoes a more robust MCS than the data burst of the private MAP.

Next, a stable private MAP message of the broadband wireless communication system in accordance with the present invention will be described.

Table 2 shows an AAS_Private_DL-MAP message. Here, only information elements (IEs) newly added to the AAS_Private_DL-MAP in accordance with the present invention will be described in detail.

**Table 2**

| Syntax | | | Size (bits) | Notes |
|---|---|---|---|---|
| Reduced_AAS_Private_DL-MAPO { | | | | |
| | Compressed map indicator | | 3 | Set to 0b110 for compressed format |
| | UL-MAP appended | | 1 | 1 = reduced UL Private map is appended. |
| | Compressed Map Type | | 2 | Shall be set to 0b I 1 for reduced private map |
| | Multiple IE | | 1 | 1 = Multiple IE Mode. |
| | *Reserved* | | 1 | Shall be set to zero |
| | if (Multiple IE) { | | | |
| | | NUM IE | 8 | |
| | } | | | |
| | for (ii= 1 :NUM IE) { | | | |
| | | Periodicity | 2 | 00 = single command, not periodic, or terminate periodicity. Otherwise, repeat DL and UL allocations once per r frames, where r = 2^{(*n-1*)}, where n is the decimal equivalent of the periodicity field. |
| | CID Included | | 1 | 1 = CID included. |
| | | | | The CID shall be included in the first compressed private MAP if it was pointed to by a DL-MAP IE with INC_CID = 0 or by a DL-MAP IE with a multicast CID. |
| | DCD Count Included | | 1 | 1 = DCD Count included. |
| | | | | The DCD count is expected to be the same as in the broadcast map that initiated the private map chain. The DCD count can be included in the private map if it changes. |
| | PHY modification Included | | 1 | 1 = included. |
| | CQICH Control Indicator | | 1 | 1 = CQICH control information included. |
| | Encoding Mode | | 2 | Encoding for DL traffic burst |
| | | | | 0b00: No HARQ |
| | | | | 0b01: Chase Combining HARQ |
| | | | | 0b10: Incremental Redundancy HARQ |
| | | | | 0b11: Conv. Code Incremental Redundancy |
| | Separate MCS Enabled | | 1 | Separate coding applied for reduced AAS_Private_MAP and DL data burst |
| | If (Separate MCS Enabled) { | | | Specifies coding for the next private map in the allocation specified by this private map |
| | | Duration | 10 | Slot duration for reduced AAS Private MAP |
| | | DIUC | 4 | Modulation & Coding Level |
| | | Repetition Coding Indication | 2 | 0b00: No repetition |
| | | | | 0b01: Repetition of 2 |
| | | | | 0b10: Repetition of 4 |
| | | | | 0b 11: Repetition of 6 |
| | } | | | |
| | if | (CID Included) { | | |
| | | CID | 16 | Must be a unicast CID |
| | } | | | |
| | If (CQICH Control Indicator == 1) { | | | |
| | | Allocation Index | 6 | CQICH subchannel index within Fast-feedback region marked with UIUC = 0 |
| | | Report Period | 3 | Reporting period indicator (in frames) |
| | | Frame offset | 3 | Start frame offset for initial reporting |
| | | Report Duration | 4 | Reporting duration indicator |
| | | CQI Measurement Type | 2 | 0b00 - CINR measurement based upon DL allocation |
| | | | | 0b01 - CINR measurement based upon |
| | | | | DL frame preamble |
| | | | | 0b10, 0b11 - Reserved |
| | | *Reserved* | 2 | Shall be set to zero |
| | } | | | |
| | if (DCD Count Included) { | | | |
| | | DCD Count | 8 | Matches the value of the configuration change count of the DCD, which describes the downlink burst profiles that apply to this map. |
| | } | | | |
| | if (PHY modification Included) { | | | |
| | | Preamble Select | 1 | 0 = Frequency shifted preamble |
| | | | | 1 = Time shifted preamble |
| | | Preamble Shift Index | 4 | Updated preamble shift index to be used starting with the frame specified by the Frame Offset. |
| | | Pilot Pattern Modifier | 1 | 0: Not Applied |
| | | | | 1: Applied |
| | | | | Shall be set to 0 if PUSC AAS zone |
| | | Pilot Pattern Index | 2 | pilot pattern used for this allocation (see section 8.4.6.3.3 (AMC), 8.4.6.1.2.6 (TUSC)): |
| | | | | 0b00 - Pilot pattern #A |
| | | | | 0b01 - Pilot pattern #B |
| | | | | 0b 10 - Pilot pattern #C |
| | | | | 0b 11 - Pilot pattern #D |
| | } | | | |
| | DL Frame Offset | | 3 | Defines the frame in which the burst is located. A value of zero indicates an allocation in the subsequent frame. |
| | if (current zone permutation is FUSC or optional FUSC) { | | | |
| | | Zone symbol offset | 8 | The offset of the OFDMA symbol in which the zone containing the burst starts, measured in OFDMA symbols from beginning of the downlink frame referred to by the Frame Offset. |
| | } | | | |
| | OFDMA Symbol Offset | | 8 | Starting symbol offset referenced to DL preamble of the downlink frame specified by the Frame Offset. |
| | If (current zone permutation is AMC, TUSC1 or TUSC2) { | | | AMC (2 x 3 type), TUSC1 and TUSC2 all have triple symbol slot lengths |
| | | Subchannel offset | 8 | |
| | | No. OFDMA triple symbol | 5 | Number of OFDMA symbols is given in multiples of 3 symbols |
| | | No. subchannels | 6 | |
| | } Else { | | | |
| | | Subchannel offset | 6 | |
| | | No. OFDMA Symbols | 7 | |
| | | No. subchannels | 6 | |
| | } | | | |
| | DIUC/N_{EP} | | 4 | DIUC for Encoding Mode 0b00, 0b01, 0b11 |
| | | | | N_{EP} for Encoding Mode 0b 10 |
| | If (HARQ Enabled) { | | | Encoding Mode 0b00, 0b 10, 0b 11 |
| | | DL HARQ ACK bitmap | 1 | HARQ ACK for previous UL burst |
| | | ACK Allocation Index | 6 | ACK channel index within HARQ ACK region |
| | | ACID | 4 | HARQ channel ID |
| | | AI_SN | 1 | HARQ Seq. Number Indicator |
| | | If (IR Type) { | | Incremental Redundancy |
| | | N_{SCH} | 4 | Applied for Encoding Mode 0b 10 |
| | | SPID | 2 | Applied for Encoding Mode 0b10 and 0b11 |
| | | *Reserved* | 2 | |
| | | } | | |
| | } | | | |
| | Repetition Coding Indication | | 2 | 0b00 - No repetition coding |
| | | | | 0b01 - Repetition coding of 2 used |
| | | | | 0b10 - Repetition coding of 4 used |
| | | | | 0b11 - Repetition coding of 6 used |
| | If (UL-MAP appended) { | | | |
| | | Reduced AAS_Provate UL-MAP () | *variable* | |
| | } | | | |
| | *Reserved* | | 3 | |
| } | | | | |
| | Nibble Padding | | *variable* | Padding depends upon HARQ options. |
| | CRC-16 | | 16 | |
| } | | | | |

As shown in Table 2, the AAS_Private_DL-MAP message includes fields of Separate MCS Enabled, Duration, and Repetition Coding Indication. The Separate MCS Enabled field indicates that modulation and coding processes are applied for the private MAP and the data burst separated from each other. The Duration field indicates the total number of slots allocated to the private MAP for a sum of AAS_Private_DL-MAP and AAS Private UL-MAP. The DIUC field indicates a scheme for processing a physical channel of a DL data burst to be transmitted, such as an MCS. That is, the DIUC field indicates an MCS level such as QPSK 3/4 or 16-QAM 1/2. The Repetition Coding Indication field is used to indicate more robust modulation and coding through a codeword repeat. For example, the Repetition Coding Indication field indicates that a coding scheme of QPSK 1/8 is applied if QPSK 1/2 is set and the number of repeats is 4.

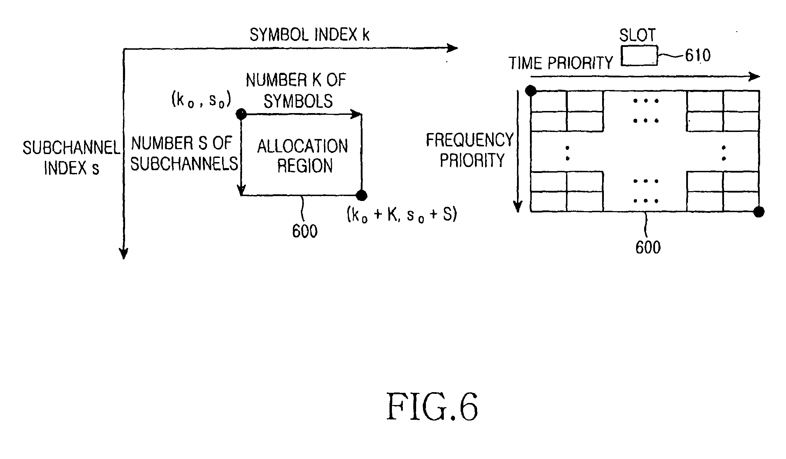

To help in understanding the private MAP in accordance with the present invention, an allocation region expression scheme defined in the broadband wireless communication system will be described with reference to FIG. 6.

In FIG. 6, a description of an allocation region in an identical permutation zone for configuring a logical subchannel is used when an allocation region of a DL frame is designated by start coordinates (kₒ, sₒ), the number K of symbols, and the number S of subchannels in a two-dimensional plane configured by a logical subchannel index s and a symbol index k. In the present invention, the total allocation region 530 of FIG. 5 corresponds to the allocation region 600 of FIG. 6.

When the allocation region 600 is designated as described above, it can be divided in a slot unit 610 corresponding to a time-frequency space of one subchannel. Because a DL allocation region designated in the DL AAS private MAP is separated into a private MAP region and an user data region as illustrated in FIG. 5 in accordance with the present invention, some of the slots for the allocation region are used to transmit the fields for indicating the number of slots belonging to the private MAP region, and a downlink interval usage code (DIUC) and Repetition Coding Indication associated with the MCS, and the remaining slots are used to transmit data. In a method for indexing the slots, the frequency has a priority in the DL and the time has a priority in the UL.

The MCS for a data burst to be transmitted in the remaining slots except slots used for the private MAP among all allocated slots uses the DIUC and Repetition Coding Indication or uses {N_{EP}, N_{SCH}} corresponding to associated control information and HARQ Control_IE when HARQ operates. {N_{EP}, N_{SCH}} is an identifier for identifying a size of information bits to be transmitted and a slot size. The HARQ Control_IE is a field for indicating a retransmission number and an HARQ channel number.

In an uplink frame of the broadband wireless communication system, a specific permutation region is divided in a symbol unit. Slots of an associated permutation region are arranged in the time priority in one dimension, and are indicated by a slot offset and slot duration in an AAS zone. Because a private MAP is transmitted only in the DL in the present invention, AAS_Private_UL-MAP is not varied. A detailed description of the AAS_Private_UL-MAP message is omitted here.

To successfully receive one data burst in the HARQ, a plurality of transmission opportunities is given. Preferably, the MS accumulates reception energy through demodulation and decoding for the plurality of transmission opportunities, determines whether reception is successful, and makes a retransmission request until the reception is successfully performed.

If the AAS private MAP message is conventionally transmitted through the same MCS as that for the data burst, a probability in which an error occurs in HARQ control information associated with an associated data burst becomes high when the MS receives the private MAP message and the data burst, such that an HARQ operation is unstable. As a result, a gain of the HARQ operation cannot be obtained.

However, the present invention transmits the control information independent of the data burst, thereby stably transmitting the control information and ensuring an HARQ gain of the data burst.

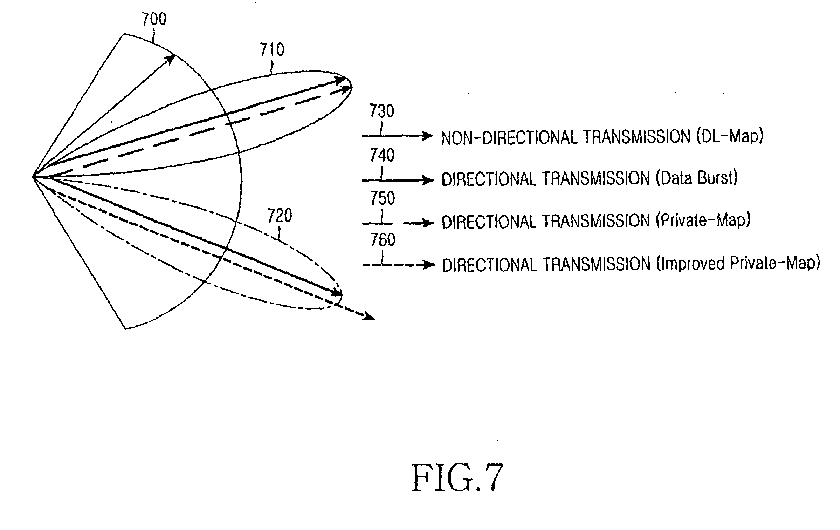

If the private MAP message corresponding to the control information and the data burst undergo different coding processes, the control information can be transmitted more stably than the data burst. When technology for actively transmitting the data burst such as HARQ is used, the effect of stability can be further increased. This stability effect will be described in more detail with reference to FIG. 7.

FIG. 7 illustrates the coverage of control information and a data burst in accordance with the present invention.

FIG. 7 illustrates a beam pattern 700 of a DL MAP at the time of nondirectional transmission and beam patterns 710 and 720 at the time of directional transmission. Reference numerals 730 to 760 denote coverage, respectively. As illustrated in FIG. 7, the coverage can be adjusted according to an improved private MAP to which a more robust modulation and coding level than that for the data burst is applied in accordance with the present invention, such that control information can be stably transmitted.

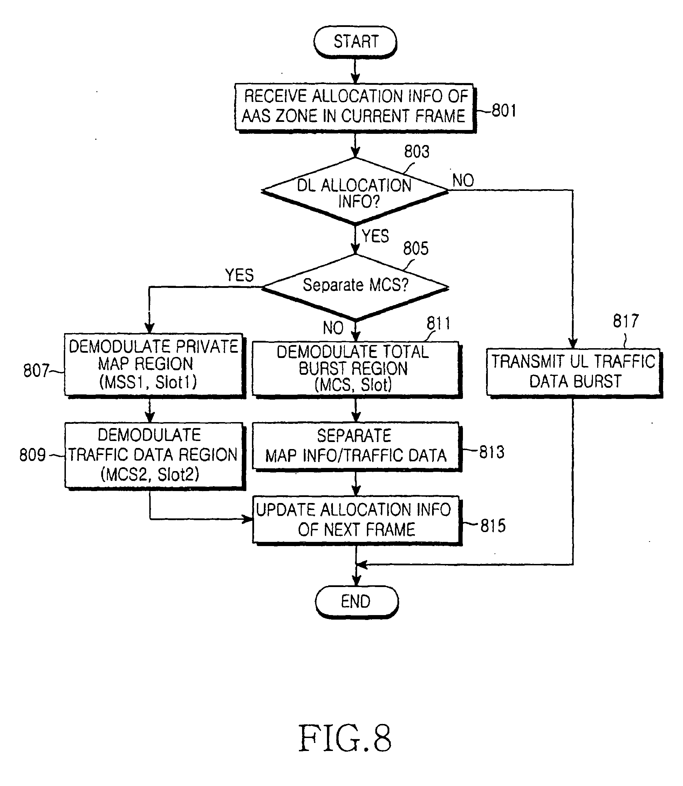

FIG. 8 is a flowchart illustrating a reception process in an MS of the broadband wireless communication system in accordance with the present invention. For convenience of explanation, it is assumed that one allocation region, for example, the region 530 of FIG. 5, is allocated to a DL AAS zone.

Referring to FIG. 8, the MS receives allocation information of an AAS zone transmitted in the current frame in step 801 and proceeds to step 803. In step 803, the MS determines whether the received allocation information is DL or UL allocation information.

If it is determined that the received allocation information is the UL allocation information, the MS transmits an associated burst, i.e., a UL traffic data burst, in step 817. However, if it is determined that the received allocation information is the DL allocation information, the MS identifies MCS levels of an user data region and a private MAP region of the DL allocation information in step 805. That is, the MS determines whether different MCS levels have been applied for the private MAP region and the user data region in step 805. If the private MAP region and the user data region form one group and the allocation information indicates that the same MCS level has been applied as a determination result, the MS proceeds to step 811. However, if the private MAP region and the user data region are separated from each other and the allocation information indicates that different MCS levels have been applied as a determination result, the MS proceeds to step 807.

If the same MCS level has been applied to the private MAP region and the user data region as a determination result in step 805, the MS demodulates a total burst region in step 811 and then proceeds to step 813. The MS separates the private MAP information and the traffic data in an information bit level in step 813 and then proceeds to step 815.

If the different MCS levels have been applied to the private MAP region and the user data region as a determination result in step 805, the MS independently demodulates the private MAP region and the user data region and then proceeds to step 815. Upon determining that the different MCS levels have been applied, the MS demodulates the private MAP region in step 807 and demodulates the user data region in step 809.

Because the different MCS levels are applied to the private MAP and the data in the present invention, the private MAP region and the traffic user data region are independently demodulated. For example, assuming that the number of subchannels allocated to the private MAP and the user data region correspond to Slot 1 and Slot 2 and MCSs applied to the private MAP and the traffic data are MCS 1 and MCS 2, respectively, the MS demodulates an associated burst region mapped to the MCS set in the BS, thereby obtaining traffic data received in the current frame and allocation information of the next frame.

As is apparent from the above description, the present invention provides an apparatus and method for transmitting information data in a wireless communication system that apply different modulation and coding schemes (MCSs) to an adaptive antenna system (AAS) private MAP message of control information and a data burst when a base station system using adaptive antenna technology defined in a broadband wireless communication system sends an operational message to a specific mobile station, thereby more stably transmitting the control information. The effect of stability can be further increased in a system for aggressively transmitting a data burst in a communication system using a hybrid automatic retransmission request (HARQ) scheme. In accordance with the present invention, the coverage of a base station can be adjusted according to an improved private MAP to which a more robust modulation and coding level than that for the data burst is applied, such that stable control information can be transmitted. As described above, the various modulation and coding processes are performed for the private MAP message and the data burst, such that a coverage extension gain can be obtained through a directional beamforming gain, and control information can be stabilized.

Although preferred embodiments of the present invention have been disclosed for illustrative purposes, those skilled in the art will appreciate that various modifications, additions, and substitutions are possible, without departing from the scope of the present invention. Therefore, the present invention is not limited to the above-described embodiments, but is defined by the following claims.

## Claims

1. A method for transmitting allocation information of an adaptive antennas system zone in an adaptive antenna system, AAS, comprising the steps of:
separating control information and downlink data to be transmitted to a mobile station;
performing different modulation and coding processes for the control information and the downlink data; and
transmitting, to the mobile station, the control information and the downlink data to which the different modulation and coding processes have been applied.

2. The method of claim 1, wherein the separating step comprises the steps of:
dividing a total allocation region in a slot unit corresponding to a time-frequency space;
dividing a downlink allocation region designated in the control information into a private MAP region and an user data region;
allocating, to the private MAP region, a number of slots for system setup among all slots of the total allocation region; and
allocating, to the user data region, a number of remaining slots except the slots allocated to the private MAP region among all the slots of the total allocation region.

3. The method of claim 1, wherein the step of performing the modulation and coding processes comprises the steps of:
dividing a total allocation region of information data to be transmitted to the mobile station into the control information and the downlink data;
allocating a first modulation and coding scheme to the control information of the total allocation region; and
allocating a second modulation and coding scheme to the information data of the total allocation region.

4. The method of claim 1, wherein the control information comprises an AAS private MAP message.

5. The method of claim 4, wherein the private MAP message comprises a field for indicating that a private MAP burst and a data burst are separated and modulation and coding are applied to the separated private MAP burst and the data burst.

6. The method of claim 4, wherein the private MAP message comprises a field for indicating a number of slots belonging to the private MAP region among all the slots of the total allocation region.

7. The method of claim 4, wherein the private MAP message comprises a field for indicating a scheme for processing a physical channel of a downlink data burst.

8. The method of claim 4, wherein the private MAP message comprises a Repetition Coding Indication field for applying a modulation and coding scheme according to a system situation.

9. The method of claim 1, further comprising the step of:
transmitting the control information and a data burst that have undergone the different modulation and coding processes, in an identical beam pattern.

10. A method for receiving allocation information of an adaptive antenna system zone in an adaptive antenna system, AAS, comprising the steps of:
identifying modulation and coding schemes of a control information region and an user data region from a total allocation region of information data transmitted from a base station (101);
decoding (807) control information according to a first modulation and coding scheme allocated to the control information of the allocation region; and
decoding (809) new data according to a second modulation and coding scheme allocated to data of the allocation region.

11. The method of claim 10, wherein the step of identifying the modulation and coding schemes comprises the steps of:
receiving (801) allocation information of an AAS zone transmitted in a current frame in a mobile station;
determining (803) if the allocation information is downlink or uplink allocation information;
identifying the modulation and coding schemes applied to the user data region and the control information region of the downlink allocation information if the received allocation information is the downlink allocation information; and
identifying that the control information region and the user data region are separated from each other and different modulation and coding schemes are applied.

12. The method of claim 11, further comprising the step of:
transmitting (817) an uplink data burst to the base station (101) if the allocation information is the uplink allocation information.

13. The method of claim 11, further comprising the step of:
updating (815) allocation information of a next frame after demodulating a total burst region when it is identified that the control information region and the user data region are configured in one group and an identical modulation and coding scheme is applied.

14. The method of claim 10, wherein the decoding step comprises the steps of:
separating (805) the control information region and the user data region when it is identified that different modulation and coding schemes are allocated to the control information region and the user data region;
decoding (807) the control information according to a first modulation and coding scheme set in the separated control information region;
decoding (809) the new data according to a second modulation and coding scheme set in the separated user data region; and
updating (815) allocation information of a next frame after decoding the control information and the new data.

15. A system for transmitting and receiving allocation information of an adaptive antenna system, AAS, zone in a wireless communication system, comprising:
a base station (101) for separating information data to be transmitted to a mobile station into control information and user data, applying different modulation and coding schemes to the control information and the user data, and transmitting the information data to the mobile station; and
the mobile station for identifying the modulation and coding schemes of the information data received from the base station, and demodulating a total of the information data according to the modulation and coding schemes, or independently demodulating the control information and the user data according to the modulation and coding schemes.

16. The system of claim 15, wherein the base station (101) divides a total allocation region of the information data to be transmitted to the mobile station into the control information and the user data, allocates a first modulation and coding scheme to the control information of the total allocation region, and allocates a second modulation and coding scheme to the user data of the total allocation region.

17. The system of claim 15, wherein the mobile station identifies a total allocation region of the information data transmitted from the base station, demodulates the control information according to a first modulation and coding scheme allocated to the control information of the allocation region, and demodulates the user data according to a second modulation and coding scheme allocated to the user data of the allocation region.

18. The system of claim 15, wherein the control information comprises an AAS private MAP message.

19. The system of claim 18, wherein the private MAP message comprises a separate Modulation and Coding Scheme, MCS, enabled field for indicating that the modulation and coding schemes are allocated.

20. The system of claim 18, wherein the private MAP message comprises a Duration field for indicating a number of slots allocated to the private MAP message.

21. The system of claim 20, wherein the number of slots comprises the number of subchannels allocated to a control information region and an user data region of a total allocation region.

22. The system of claim 18, wherein the private MAP message comprises a Downlink Interval Usage Code, DIUC, field for indicating a modulation and coding level of a downlink data burst to be transmitted.

23. The system of claim 18, wherein the private MAP message comprises a Repetition Coding Indication field for applying a modulation and coding scheme according to a system situation.

24. The system of claim 15, wherein the base station reports division between the control information and the user data to the mobile station through an AAS private MAP message.

25. A method for transmitting allocation information of an adaptive antenna system, AAS, in a communication system, comprising the steps of:
making, by a base station (101), an AAS private downlink MAP message including a separate MCS enabled field for indicating whether modulation and coding schemes are differently applied to a control information and a user data or not; and
transmitting the AAS private downlink MAP message to a mobile station.

26. The method of claim 25, wherein the AAS private downlink MAP message comprises a repetition coding indication field for indicating a coding scheme based on a number of repeats of a set coding scheme when the separate MCS enabled field indicating that the modulation and coding schemes are differently applied to the control information and the user data.

27. The method of claim 25, wherein the AAS private downlink MAP message comprises a Downlink Interval Usage Code, DIUC, field for indicating a modulation and coding level when the separate MCS enabled field indicating that the modulation and coding schemes are differently applied to the control information and the user data.

## Patentansprüche

1. Verfahren zum Senden von Zuweisungsinformationen einer Zone eines adaptiven Antennensystems in einem adaptiven Antennensystem, AAS, das die folgenden Schritte umfasst:
Trennen von Steuerinformationen und Downlink-Daten, die zu einer Mobilstation zu senden sind;
Durchführen verschiedener Modulations- und Codierprozesse für die Steuerinformationen und die Downlink-Daten; und
Senden der Steuerinformationen und der Downlink-Daten, auf die die verschiedenen Modulations- und Codierprozesse angewendet worden sind, zu der Mobilstation.

2. Verfahren nach Anspruch 1, wobei der Schritt des Trennens die folgenden Schritte umfasst:
Unterteilen eines Gesamt-Zuweisungsbereiches in eine Schlitzeinheit entsprechend einem Zeit-Frequenz-Raum;
Unterteilen eines Downlink-Zuweisungsbereiches, der in den Steuerinformationen vorgegeben ist, in einen privaten MAP-Bereich und einen Benutzerdaten-Bereich;
Zuweisen einer Anzahl von Schlitzen für System-Setup von allen Schlitzen des Gesamt-Zuweisungsbereiches zu dem privaten MAP-Bereich; und
Zuweisen einer Anzahl verbleibender Schlitze mit Ausnahme der dem privaten MAP-Bereich zugewiesenen Schlitze von allen Schlitzen des Gesamt-Zuweisungsbereiches zu dem Benutzerdaten-Bereich.

3. Verfahren nach Anspruch 1, wobei der Schritt des Durchführens der Modulations-und Codierprozesse die folgenden Schritte umfasst:
Unterteilen eines Gesamt-Zuweisungsbereiches von Informationsdaten, die zu der Mobilstation zu senden sind, in die Steuerinformationen und die Downlink-Daten;
Zuweisen eines ersten Modulations-und-Codier-Schemas zu den Steuerinformationen des Gesamt-Zuweisungsbereiches; und
Zuweisen eines zweiten Modulations-und-Codier-Schemas zu den Informationsdaten des Gesamt-Zuweisungsbereiches.

4. Verfahren nach Anspruch 1, wobei die Steuerinformationen eine private MAP-Nachricht des AAS umfassen.

5. Verfahren nach Anspruch 4, wobei die private MAP-Nachricht ein Feld umfasst, das anzeigt, dass ein privater MAP-Burst und ein Daten-Burst getrennt sind und Modulation und Codierung auf den privaten MAP-Burst und den Daten-Burst, die getrennt sind, angewendet werden.

6. Verfahren nach Anspruch 4, wobei die private MAP-Nachricht ein Feld umfasst, das eine Anzahl von Schlitzen anzeigt, die von allen Schlitzen des Gesamt-Zuweisungsbereiches zu dem privater MAP-Bereich gehören.

7. Verfahren nach Anspruch 4, wobei die private MAP-Nachricht ein Feld umfasst, das ein Schema zum Verarbeiten eines physikalischen Kanals eines Downlink-Daten-Burst anzeigt.

8. Verfahren nach Anspruch 4, wobei die private MAP-Nachricht ein Repetition-Coding-Indication-Feld zum Anwenden eines Modulations-und-Codier-Schemas gemäß einer Systemsituation umfasst.

9. Verfahren nach Anspruch 1, das des Weiteren den folgenden Schritt umfasst:
Senden der Steuerinformationen und eines Daten-Burst, die die verschiedenen Modulations- und Codierprozesse durchlaufen haben, in einem identischen Strahlungsmuster.

10. Verfahren zum Empfangen von Zuweisungsinformationen einer Zone eines adaptiven Antennensystems in einem adaptiven Antennensystem, AAS, das die folgenden Schritte umfasst:
Identifizieren von Modulations-und-Codier-Schemen eines Steuerinformations-Bereiches und eines Benutzerdaten-Bereiches aus einem Gesamt-Zuweisungsbereich von von einer Basisstation (101) gesendeten Informationsdaten;
Decodieren (807) von Steuerinformationen gemäß einem ersten Modulations-und-Codier-Schema, das den Steuerinformationen des Zuweisungsbereiches zugewiesen wird; und
Decodieren (809) neuer Daten gemäß einem zweiten Modulations-und-Codier-Schema, das Daten des Zuweisungsbereiches zugewiesen wird.

11. Verfahren nach Anspruch 10, wobei der Schritt des Identifizierens der Modulations-und-Codier-Schemen die folgenden Schritte umfasst:
Empfangen (801) von Zuweisungsinformationen einer AAS-Zone, die in einem aktuellen Frame gesendet werden, in einer Mobilstation;
Bestimmen (803), ob die Zuweisungsinformationen Downlink- oder Uplink-Zuweisungsinformationen sind;
Feststellen der auf den Benutzerdaten-Bereich und den Steuerinformations-Bereich der Downlink-Zuweisungsinformationen angewendeten Modulations-und-Codier-Schemen, wenn die empfangenen Zuweisungsinformationen die Downlink-Zuweisungsinformationen sind; und
Identifizieren, dass der Steuerinformations-Bereich und der Benutzerdaten-Bereich voneinander getrennt sind und verschiedene Modulations-und-Codier-Schemen angewendet werden.

12. Verfahren nach Anspruch 11, das des Weiteren den folgenden Schritt umfasst:
Senden (817) eines Uplink-Daten-Burst zu der Basisstation (101), wenn die Zuweisungsinformationen die Uplink-Zuweisungsinformationen sind.

13. Verfahren nach Anspruch 11, das des Weiteren den folgenden Schritt umfasst:
Aktualisieren (815) von Zuweisungsinformationen eines nächsten Frame nach Demodulieren eines Gesamt-Burst-Bereiches, wenn festgestellt wird, dass der Steuerinformations-Bereich und der Benutzerdaten-Bereich in einer Gruppe konfiguriert sind und ein identisches Modulations-und-Codier-Schema angewendet wird.

14. Verfahren nach Anspruch 10, wobei der Decodierschritt die folgenden Schritte umfasst:
Trennen (805) des Steuerinformations-Bereichs und des Benutzerdaten-Bereichs, wenn festgestellt wird, dass dem Steuerinformations-Bereich und dem Benutzerdaten-Bereich verschiedene Modulations-und-Codier-Schemen zugewiesen werden;
Decodieren (807) der Steuerinformationen gemäß einem ersten Modulations-und-Codier-Schema, das in dem getrennten Steuerinformations-Bereich festgelegt ist;
Decodieren (809) der neuen Daten gemäß einem zweiten Modulations-und-Codier-Schema, das in dem getrennten Benutzerdaten-Bereich festgelegt ist; und
Aktualisieren (815) von Zuweisungsinformationen eines nächsten Frame nach Decodieren der Steuerinformationen und der neuen Daten.

15. System zum Senden und Empfangen von Zuweisungsinformationen einer Zone eines adaptiven Antennensystems, AAS, in einem Drahtlos-Kommunikationssystem, das umfasst:
eine Basisstation (101) zum Trennen von zu einer Mobilstation zu sendenden Informationsdaten in Steuerinformationen und Benutzerdaten, Anwenden verschiedener Modulations-und-Codier-Schemen auf die Steuerinformationen und die Benutzerdaten und Senden der Informationsdaten zu der Mobilstation; und
die Mobilstation zum Feststellen der Modulations-und-Codier-Schemen der von der Basisstation empfangenen Informationsdaten und zum Demodulieren einer Gesamtheit der Informationsdaten gemäß den Modulations-und-Codier-Schemen oder zum unabhängigen Demodulieren der Steuerinformationen und der Benutzerdaten gemäß den Modulations-und-Codier-Schemen.

16. System nach Anspruch 15, wobei die Basisstation (101) einen Gesamt-Zuweisungsbereich der zu der Mobilstation zu sendenden Informationsdaten in die Steuerinformationen und die Benutzerdaten unterteilt, den Steuerinformationen des Gesamt-Zuweisungsbereiches ein erstes Modulations-und-Codier-Schema zuweist und den Benutzerdaten des Gesamt-Zuweisungsbereiches ein zweites Modulations-und-Codier-Schema zuweist.

17. System nach Anspruch 15, wobei die Mobilstation einen Gesamt-Zuweisungsbereich der von der Basisstation gesendeten Informationsdaten identifiziert, die Steuerinformationen gemäß einem ersten Modulations-und-Codier-Schema demoduliert, das den Steuerinformationen des Zuweisungsbereiches zugewiesen wird, und die Benutzerdaten gemäß einem zweiten Modulations-und-Codier-Schema demoduliert, das den Benutzerdaten des Zuweisungsbereiches zugewiesen wird.

18. System nach Anspruch 15, wobei die Steuerinformationen eine private MAP-Nachricht eines ASS umfassen.

19. System nach Anspruch 18, wobei die private MAP-Nachricht ein separates Modulations-und-Codier-Schema, MCS, -Freigabefeld umfasst, das anzeigt, dass die Modulations-und-Codier-Schemen zugewiesen sind.

20. System nach Anspruch 18, wobei die private MAP-Nachricht ein Duration-Feld umfasst, das eine Anzahl von Schlitzen anzeigt, die der privaten MAP-Nachricht zugewiesen sind.

21. System nach Anspruch 20, wobei die Anzahl von Schlitzen die Anzahl von Teilkanälen umfasst, die einem Steuerinformations-Bereich und einem Benutzerdaten-Bereich eines Gesamt-Zuweisungsbereiches zugewiesen sind.

22. System nach Anspruch 18, wobei die private MAP-Nachricht ein Downlink-Interval-Usage-Code, DIUC,-Feld umfasst, das einen Modulations-und-Codier-Pegel eines zu sendenden Downlink-Daten-Burst anzeigt.

23. System nach Anspruch 18, wobei die private MAP-Nachricht ein Repetition-Coding-Indication-Feld zum Anwenden eines Modulations-und-Codier-Schemas gemäß einer Systemsituation umfasst.

24. System nach Anspruch 15, wobei die Basisstation Unterteilung zwischen den Steuerinformationen und den Benutzerdaten zu der Mobilstation über eine private MAP-Nachricht eines ASS berichtet.

25. Verfahren zum Senden von Zuweisungsinformationen eines adaptiven Antennensystems, AAS, in einem Kommunikationssystem, das die folgenden Schritte umfasst:
Erzeugen einer privaten Downlink-MAP-Nachricht eines AAS, die ein separates MCS-Freigabefeld enthält, das anzeigt, ob Modulations-und-Codier-Schemen verschieden auf Steuerinformationen und Benutzerdaten angewendet werden oder nicht, durch eine Basisstation (101); und
Senden der privaten Downlink-MAP-Nachricht eines AAS zu einer Mobilstation.

26. Verfahren nach Anspruch 25, wobei die private Downlink-MAP-Nachricht des AAS ein Repetition-Coding-Indication-Feld umfasst, das ein Codier-Schema anzeigt, das auf einer Anzahl von Wiederholungen eines eingestellten Codier-Schemas basiert, wenn das separate MCS-Freigabefeld anzeigt, dass die Modulations-und-Codier-Schemen verschieden auf die Steuerinformationen und die Benutzerdaten angewendet werden.

27. System nach Anspruch 25, wobei die private Downlink-MAP-Nachricht des AAS ein Downlink-Interval-Usage-Code-Feld, DIUC, umfasst, das einen Modulations-und-Codier-Pegel anzeigt, wenn das separate MCS-Freigabefeld anzeigt, dass die Modulations-und-Codier-Schemen verschieden auf die Steuerinformationen und die Benutzerdaten angewendet werden.

## Revendications

1. Procédé pour émettre de l'information d'allocation d'une zone de système d'antennes adaptatif dans un système d'antennes adaptatif, AAS pour "Adaptative Antenna System", comprenant les étapes suivantes :
séparer une information de commande et des données de liaison descendante à émettre vers une station mobile ;
effectuer des processus de modulation et de codage différents pour l'information de commande et les données de liaison descendante ; et
émettre, vers la station mobile, l'information de commande et les données de liaison descendante auxquelles les processus de modulation et de codage différents ont été appliqués.

2. Procédé selon la revendication 1, dans lequel l'étape de séparation comprend les étapes suivantes :
diviser une région d'allocation totale en une unité de créneau correspondant à un espace temps - fréquence ;
diviser une région d'allocation de liaison descendante désignée dans l'information de commande, en une région MAP privée et une région de données d'utilisateur ;
allouer à la région MAP privée un nombre de créneaux pour la configuration de système, parmi tous les créneaux de la région d'allocation totale ; et
allouer à la région de données d'utilisateur un nombre de créneaux restants, à l'exception des créneaux alloués à la région MAP privée, parmi tous les créneaux dans la région d'allocation totale.

3. Procédé selon la revendication 1, dans lequel l'étape consistant à effectuer les processus de modulation et de codage comprend les étapes suivantes :
diviser une région d'allocation totale de données d'information à émettre vers la station mobile entre l'information de commande et les données de liaison descendante ;
allouer une première technique de modulation et de codage à l'information de commande de la région d'allocation totale ; et
allouer une deuxième technique de modulation et de codage aux données d'information de la région d'allocation totale.

4. Procédé selon la revendication 1, dans lequel l'information de commande comprend un message MAP privé d'AAS.

5. Procédé selon la revendication 4, dans lequel le message MAP privé comprend un champ pour indiquer qu'une salve MAP privée et une salve de données sont séparées, et une modulation et un codage sont appliqués à la salve MAP privée séparée et à la salve de données.

6. Procédé selon la revendication 4, dans lequel le message MAP privé comprend un champ pour indiquer un nombre de créneaux appartenant à la région MAP privée, parmi tous les créneaux de la région d'allocation totale.

7. Procédé selon la revendication 4, dans lequel le message MAP privé comprend un champ pour indiquer une technique pour traiter un canal physique d'une salve de données de liaison descendante.

8. Procédé selon la revendication 4, dans lequel le message MAP privé comprend un champ d'Indication de Codage de Répétitions pour appliquer une technique de modulation et de codage en conformité avec une situation de système.

9. Procédé selon la revendication 1, comprenant en outre l'étape suivante:
émettre l'information de commande et une salve de données qui ont subi les processus de modulation et de codage différents, dans une configuration de faisceau identique.

10. Procédé pour recevoir une information d'allocation d'une zone de système d'antennes adaptatif dans un système d'antennes adaptatif, AAS, comprenant les étapes suivantes :
identifier des techniques de modulation et de codage d'une région d'information de commande et d'une région de données d'utilisateur, dans une région d'allocation totale de données d'information émises par une station de base (101) ;
décoder (807) l'information de commande conformément à une première technique de modulation et de codage allouée à l'information de commande de la région d'allocation ; et
décoder (809) de nouvelles données conformément à une deuxième technique de modulation et de codage allouée à des données de la région d'allocation.

11. Procédé selon la revendication 10, dans lequel l'étape d'identification des techniques de modulation et de codage comprend les étapes suivantes :
recevoir (801) dans une station mobile une information d'allocation d'une zone d'AAS émise dans une trame présente ;
déterminer (803) si l'information d'allocation est une information d'allocation de liaison descendante ou de liaison montante ;
identifier les techniques de modulation et de codage appliquées à la région de données d'utilisateur et à la région d'information de commande de l'information d'allocation de liaison descendante, si l'information d'allocation reçue est l'information d'allocation de liaison descendante ; et
identifier que la région d'information de commande et la région de données d'utilisateur sont mutuellement séparées et que des techniques de modulation et de codage différentes sont appliquées.

12. Procédé selon la revendication 11, comprenant en outre l'étape suivante :
émettre (817) une salve de données de liaison montante vers la station de base (101) si l'information d'allocation est l'information d'allocation de liaison montante.

13. Procédé selon la revendication 11, comprenant en outre l'étape suivante :
actualiser (815) l'information d'allocation d'une trame suivante après démodulation d'une région de salve totale, lorsqu'il est identifié que la région d'information de commande et la région de données d'utilisateur sont configurées en un seul groupe, et une technique de modulation et de codage identique est appliquée.

14. Procédé selon la revendication 10, dans lequel l'étape de décodage comprend les étapes suivantes :
séparer (805) la région d'information de commande et la région de données d'utilisateur lorsqu'il est identifié que des techniques de modulation et de codage différentes sont allouées à la région d'information de commande et à la région de données d'utilisateur ;
décoder (807) l'information de commande conformément à une première technique de modulation et de codage fixée dans la région d'information de commande séparée ;
décoder (809) les nouvelles données conformément à une deuxième technique de modulation et de codage fixée dans la région de données d'utilisateur séparée ; et
actualiser (815) l'information d'allocation d'une trame suivante après le décodage de l'information de commande et des nouvelles données.

15. Système pour émettre et recevoir de l'information d'allocation d'une zone de système d'antennes adaptatif, AAS, dans un système de communication sans fil, comprenant :
une station de base (101) pour séparer des données d'information à émettre vers une station mobile en information de commande et données d'utilisateur, appliquer des techniques de modulation et de codage différentes à l'information de commande et aux données d'utilisateur, et émettre les données d'information vers la station mobile ; et
la station mobile pour identifier les techniques de modulation et de codage des données d'information reçues de la station de base, et démoduler une totalité des données d'information conformément aux techniques de modulation et de codage, ou démoduler indépendamment l'information de commande et les données d'utilisateur conformément aux techniques de modulation et de codage.

16. Système selon la revendication 15, dans lequel la station de base (101) divise une région d'allocation totale des données d'information à émettre vers la station mobile en l'information de commande et en les données d'utilisateur, alloue une première technique de modulation et de codage à l'information de commande de la région d'allocation totale, et alloue une deuxième technique de modulation et de codage aux données d'utilisateur de la région d'allocation totale.

17. Système selon la revendication 15, dans lequel la station mobile identifie une région d'allocation totale des données d'information émises de la station de base, démodule l'information de commande conformément à une première technique de modulation et de codage allouée à l'information de commande de la région d'allocation, et démodule les données d'utilisateur conformément à une deuxième technique de modulation et de codage allouée aux données d'utilisateur de la région d'allocation.

18. Système selon la revendication 15, dans lequel l'information de commande comprend un message MAP privé d'AAS.

19. Système selon la revendication 18, dans lequel le message MAP privé comprend un champ d'Existence de Techniques de Modulation et de Codage (MCS pour "Modulation and Coding Scheme") Séparées, pour indiquer que les techniques de modulation et de codage sont allouées.

20. Système selon la revendication 18, dans lequel le message MAP privé comprend un champ de Durée pour indiquer un nombre de créneaux alloués au message MAP privé.

21. Système selon la revendication 20, dans lequel le nombre de créneaux comprend le nombre de sous-canaux alloués à une région d'information de commande et une région de données d'utilisateur d'une région d'allocation totale.

22. Système selon la revendication 18, dans lequel le message MAP privé comprend un champ de Code d'Usage d'Intervalle de Liaison Descendante (DIUC pour "Downlink Interval Usage Code") pour indiquer un niveau de modulation et de codage d'une salve de données de liaison descendante à émettre.

23. Système selon la revendication 18, dans lequel le message MAP privé comprend un champ d'Indication de Codage de Répétitions pour appliquer une technique de modulation et de codage conformément à une situation de système.

24. Système selon la revendication 15, dans lequel la station de base communique à la station mobile la division entre l'information de commande et les données d'utilisateur au moyen d'un message MAP privé d'AAS.

25. Procédé pour émettre de l'information d'allocation d'un système d'antennes adaptatif, AAS, dans un système de communication, comprenant les étapes suivantes :
créer, par une station de base (101), un message MAP de liaison descendante privé d'AAS, incluant un champ d'Existence de MCS Séparées, pour indiquer si des techniques de modulation et de codage sont appliquées différemment à une information de commande et à une donnée d'utilisateur, ou non ; et
émettre vers une station mobile le message MAP de liaison descendante privé d'AAS.

26. Procédé selon la revendication 25, dans lequel le message MAP de liaison descendante privé d'AAS comprend un champ d'indication de codage de répétitions pour indiquer une technique de codage basée sur un nombre de répétitions d'une technique de codage fixée, lorsque le champ d'Existence de MCS Séparées indique que les techniques de modulation et de codage sont appliquées différemment à l'information de commande et aux données d'utilisateur.

27. Procédé selon la revendication 25, dans lequel le message MAP de liaison descendante privé d'AAS comprend un champ de Code d'Usage d'Intervalle de Liaison Descendante (DIUC pour "Downlink Interval Usage Code") pour indiquer un niveau de modulation et de codage, lorsque le champ d'Existence de MCS Séparées indique que les techniques de modulation et de codage sont appliquées différemment à l'information de commande et aux données d'utilisateur.
